(19) Europäisches Patentamt
European Patent Office
Office européen des brevets

(11) **EP 2 902 982 A1**

(12) **EUROPEAN PATENT APPLICATION**
published in accordance with Art. 153(4) EPC

(43) Date of publication:
**05.08.2015 Bulletin 2015/32**

(51) Int Cl.:
***G07G 1/14*** *(2006.01)*

(21) Application number: **13842587.1**

(22) Date of filing: **18.09.2013**

(86) International application number:
**PCT/CN2013/083790**

(87) International publication number:
**WO 2014/048268 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2012 CN 201210373449**

(71) Applicant: **China Unionpay Co., Ltd**
**Shanghai 200135 (CN)**

(72) Inventors:
• **CHAI, Hongfeng**
**Shanghai 200135 (CN)**
• **LU, Zhijun**
**Shanghai 200135 (CN)**
• **HE, Shuo**
**Shanghai 200135 (CN)**
• **LIU, Guobao**
**Shanghai 200135 (CN)**
• **WAN, Sishuang**
**Shanghai 200135 (CN)**

(74) Representative: **Seemann & Partner**
**Raboisen 6**
**20095 Hamburg (DE)**

(54) **SYSTEM AND METHOD OF MONITORING FOR OUT-OF-BOUNDS MOBILE POS TERMINALS**

(57) The invention relates to a machine-moving monitoring system for mobile POS terminal and a machine-moving monitoring method for mobile POS terminal. The method comprises: a base station information acquiring step in which the mobile POS terminal acquires base station information of a current base station where the mobile POS terminal is located from the base station; an information uploading step in which a POS terminal information of the POS terminal and the base station information is uploaded when a transaction is being conducted on the mobile POS terminal; a base station location acquiring step in which an actual location information of the base station is acquired according to the uploaded base station information; a trader location information acquiring step in which a trader location information of a trader corresponding to the mobile POS terminal is acquired according to the uploaded POS terminal information; and a machine-moving determining step in which an actual distance between the base station and the trader is calculated according to the actual location information of the base station and the trader location information, and it is determined that a machine-moving behavior has occurred if the actual distance exceeds a specified distance. The invention can monitor whether a machine-moving behavior has happened effectively, quickly and accurately.

Fig. 1

**Description**

Related applications

This application is a translation of the international application PCT/CN2013/083790 filed on September 18, 2013, which in turn claims priority from the Chinese application with the official file number 201210373449.3, filed on September 27, 2012. The entire contents of both applications are incorporated herein by reference.

FIELD OF THE INVENTION

The present invention relates to the technical field of financial communication technology, and more particularly, to a monitoring system and method capable of monitoring the location in use of an electronic device such as mobile POS terminal, etc.

BACKGROUND

In a financial payment field, a mobile POS machine that can be conveniently used is becoming popular with more and more traders. However, a very important problem that arises is that more and more illegal traders are involved in illegal activities such as cash out by applying for a POS machine and using it trans-regionally. Such a potential risk is called machine-moving risk.
In the prior art, there are two following technologies for monitoring the machine-moving risk.
The first technology detects the machine-moving risk by, for an existing dial POS machine, comparing a long-distance area code of the address of the traders in the profile information of traders with the collected dialed number of the terminal. Since the mobile POS machine operates on a mobile network rather than a dial network, such a technology cannot be used on a mobile POS machine. Moreover, only a different long-distance area code can be identified through this technology which compares a long-distance area code. A machine-moving activity that happens in the same area cannot be determined by this technology.
The other technology detects the proportion of a local card in the transactions that are completed in the POS machine. Again, such a technology cannot identify a machine-moving activity that happens in the same area. Moreover, such a technology is based on a statistical activity and the detection cannot be made until a substantial transaction data is obtained, thus failing to prevent the risk in time. In addition, in areas where tourists are populated, a very large proportion of non-local cards generally does not mean a machine-moving activity. Therefore, an erroneous determination may be made.

SUMMARY OF THE INVENTION

In view of the above problems, the invention aims to provide a machine-moving monitoring system for mobile POS terminal and a machine-moving monitoring method for mobile POS terminal that can operate quickly and accurately determine a machine-moving risk.
The machine-moving monitoring method for mobile POS terminal according to the invention, comprising the following steps:

a base station information acquiring step in which the mobile POS terminal acquires base station information of a current base station where the mobile POS terminal is located from the base station;
an information uploading step in which a POS terminal information of the POS terminal and the base station information is uploaded when a transaction is being conducted on the mobile POS terminal;
a base station location acquiring step in which an actual location information of the base station is acquired according to the uploaded base station information;
a trader location information acquiring step in which a trader location information of a trader corresponding to the mobile POS terminal is acquired according to the uploaded POS terminal information; and
a machine-moving determining step in which an actual distance between the base station and the trader is calculated according to the actual location information of the base station and the trader location information, and it is determined that a machine-moving behavior has occurred if the actual distance exceeds a specified distance.

Wherein, in the base station information acquiring step, the base station information of the current base station where the mobile POS terminal is located is acquired by continuously sending a request information to surrounding base stations after a SIM card is inserted into the mobile POS terminal, and the mobile POS terminal stores the base station information in a temporary memory area of the mobile POS terminal after acquiring the base station information. Alternatively, in the base station information acquiring step, the mobile POS terminal sends a request information to surrounding base stations at the same time of uploading transaction information so as to acquire the base station information of the current base station where the mobile POS terminal is located.

Wherein the base station information comprises country code, network code, location area code, current base station ID.

Wherein, the POS terminal information comprises POS terminal ID and the trader ID to which the POS terminal belongs.

Wherein, the actual location information of the base station at least comprises the longitude and latitude of the actual location of the base station; the trader location information at least comprises the longitude and latitude of the trader.

Wherein, in the trader location information acquiring step, the longitude and latitude (Lat1, Lng1) of the trader is acquired as the trader location information according to the POS terminal information;

in the base station location information acquiring step, the longitude and latitude (Lat2, Lng2) of the actual location of the base station is acquired as the actual location information of the base station according to the base station information;

in the machine-moving determining step, the actual distance between the base station and the trader is calculated using the expression below according to the longitude and latitude (Lat1, Lng1) of the trader and the longitude and latitude (Lat2, Lng2) of the actual location of the base station:

$$2\times\arcsin\sqrt{\sin^2\frac{RadLat1-RadLat2}{2}+\cos(RadLat1)\times\cos(RadLat2)\times\sin^2\frac{RadLng1-RadLng2}{2}}\times6378137.0$$

The machine-moving monitoring system for mobile POS terminal according to the invention comprises a mobile POS terminal, a transaction server, a machine-moving risk monitoring device, a location server, a base station location database and a trader profile database; wherein

the mobile POS terminal acquiring the base station information of the current base station where the mobile POS terminal is located by sending request information to surrounding base stations, and uploading the base station information and the POS terminal information altogether to the transaction server when conducting the transaction;

the base station location database storing the actual location information of the base station in unique correspondence to the base station information;

the trader profile database storing the trader location information of the trader in unique correspondence to the trader information;

the transaction server forwarding the base station information and the POS terminal information received from the mobile POS terminal to the machine-moving risk monitoring device;

the location server, communicatively connected between the machine-moving risk monitoring device and the base station location database, retrieving, from the base station location database, the actual location information of the base station corresponding to the base station information according to the base station information from the machine-moving risk monitoring device, and returning the actual location information of the base station to the machine-moving risk monitoring device;

the machine-moving risk monitoring device acquiring the base station information and the POS terminal information from the transaction server and sending the acquired base station information to the location server and returns the acquired actual location information of the base station from the location server, on the other hand, retrieving the trader location information from the trader profile database according to the acquired POS terminal information, and calculating the actual distance between the current base station and the trader according to the actual location information of the base station and the trader location information, and determining that a machine-moving behavior has occurred if the actual distance exceeds a specified distance.

Wherein, the mobile POS terminal continuously sends request information to surrounding base stations after a SIM card is inserted into the mobile POS terminal so as to acquire the base station information of the current base station where the mobile POS terminal is located and stores the acquired base station information of the current base station in a temporary memory area of the mobile POS terminal. Alternatively, the mobile POS terminal sends request information to surrounding base stations at the same time of uploading transaction information so as to acquire the base station information of the current base station where the mobile POS terminal is located.

Wherein, the base station information comprises country code, network code, location area code, current base station ID.

Wherein, the POS terminal information comprises POS terminal ID and the trader ID to which the POS terminal belongs.

Wherein, the machine-moving risk monitoring device comprises: an information acquiring module for acquiring the base station information and the POS terminal information from the transaction server; a sending module for sending the base station information to the location server; a receiving module for receiving the returned actual location information of the base station corresponding to the base information from the location server; a retrieving module for retrieving trader information from the trader profile database according to the acquired POS terminal information; and a determining module for calculating the actual distance between the current base station and the trader according to the actual location information of the base station and the trader location information, and determining that a machine-moving behavior has occurred if the actual distance exceeds the specified distance.

Wherein, the location information of the base station at least comprises the longitude and latitude of the actual location of the base station, and the trader location information at least comprises the longitude and latitude of the trader.

Wherein, the determining module calculates the actual distance between the base station and the trader using the expression below according to the longitude and latitude (Lat1, Lng1) of the trader and the longitude and latitude (Lat2, Lng2) of the actual location of the base station:

$$2 \times \arcsin \sqrt{\sin^2 \frac{RadLat1 - RadLat2}{2} + \cos(RadLat1) \times \cos(RadLat2) \times \sin^2 \frac{RadLng1 - RadLng2}{2}} \times 6378137.0$$

As described above, in order to solve the machine-moving problem in the prior art, the machine-moving monitoring system and method for mobile POS terminal according to the invention make a comparison between collected geographical location information of mobile POS terminal and the address of trader in the profile of trader. If the distance is not within a preset range, there is a risk of machine-moving. The machine-moving monitoring system and method for mobile POS terminal according to the invention can effectively monitor the situation in which the mobile POS terminal is not being used in a specified range, more quickly and accurately than the existing methods. Especially, by calculating an actual distance between the mobile POS terminal and the trader and determining whether the actual distance exceeds the preset range, thereby whether machine-moving has happened can be determined with a very high accuracy of determination result.

BRIEF DESCRIPTION OF THE DRAWINGS

FIG. 1 is a schematic view showing a structure of the machine-moving monitoring system for mobile POS terminal according to a first embodiment of the invention;

FIG. 2 is a schematic flowchart of the machine-moving monitoring method for mobile POS terminal according to the invention; and

FIG. 3 is a schematic view showing a structure of the machine-moving monitoring device in the machine-moving monitoring system for mobile POS terminal according to a second embodiment of the invention.

DETAILED DESCRIPTION OF THE INVENTION

Some of many embodiments of the invention will be described below for the purpose of providing a basic understanding of the invention. It is not intended to identify any essential or crucial element of the invention or limit the scope of protection.

FIRST EMBODIMENT

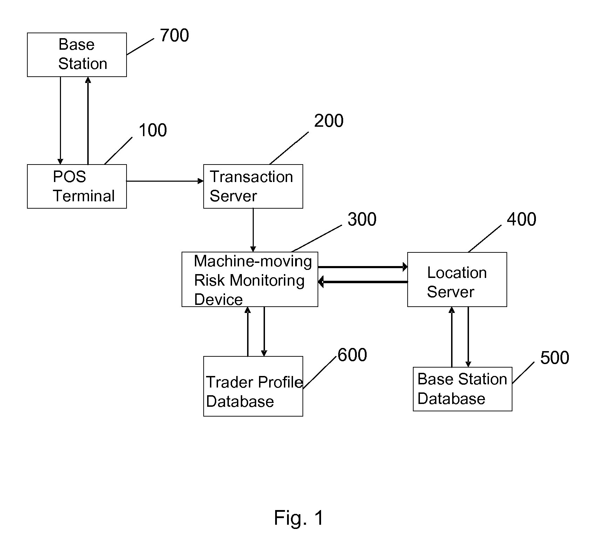

FIG. 1 is a schematic view showing a structure of the machine-moving monitoring system for mobile POS terminal according to the invention.

The machine-moving monitoring system for mobile POS terminal according to the invention will be described below with reference to FIG. 1.

As shown in FIG. 1, the machine-moving monitoring system for mobile POS terminal according to the invention comprises a mobile POS terminal 100, a transaction server 200, a machine-moving risk monitoring device 300, a location server 400, a base station location database 500 and a trader profile database 600, wherein the mobile POS terminal 100 acquires the base station information of the current base station where the mobile POS terminal is located by sending a request information to a surrounding base station 700, and uploads the base station information and the POS terminal information altogether to the transaction server 200 when conducting the transaction; the base station location database 500 stores the actual location information of the base station in unique correspondence to the base station information; the trader profile database 600 stores the trader location information of the trader in unique correspondence to the trader information; the transaction server 200 forwards the base station information and the POS terminal information received from the mobile POS terminal 100 to the machine-moving risk monitoring device 300; the location server 400 is communicatively connected between the machine-moving risk monitoring device 300 and the base station location database 500; the location server 400 retrieves, from the base station location database, actual location information of the base station corresponding to the base station information according to the base station information from the machine-moving risk monitoring device 300, and returns the actual location information of the base station to the machine-moving risk monitoring device 300; the machine-moving risk monitoring device 300 acquires the base station information and the POS terminal information from the transaction server 200, sends the acquired base station information to the location server and returns the acquired actual location information of the base station from the location server. On the other hand, the trader location information is retrieved from the trader profile database 600 according to the acquired POS terminal information. The actual distance between the current base station and the trader is calculated according to the actual location information of the base station and the trader location information. If the actual distance exceeds the specified distance, it is determined that there is a machine-moving behavior.

The mobile POS terminal 100, a transaction server 200, a machine-moving risk monitoring device 300, a location server 400, a base station location database 500 and a trader profile database 600 of the machine-moving monitoring system for mobile POS terminal according to the invention will be described specifically as follows.

The mobile POS terminal 100 is a mobile POS machine of the trader. The mobile POS terminal 100 uses a SIM card provided by telecommunication operator to be connected to a wireless communication network of the telecommunication operator. The mobile POS terminal 100 acquires base station information in the two ways. In the first way, the mobile POS terminal 100 continuously sends request information to the surrounding base station 700 after the SIM card is inserted into the mobile POS terminal 100 so as to acquire base station information of the current base station where the mobile POS terminal is located, and stores the base station information acquired from the base station 700 in a temporary memory of the mobile POS terminal 100. In the second way, the mobile POS terminal 100 sends request information to the surrounding base station 700 at the same time of uploading transaction information to the transaction server 200 when the POS terminal 100 is conducting the transaction so as to acquire the base station information of the current base station where the mobile POS terminal is located. Herein, the base station information comprises MCC (Mobile Country Code, MNC (Mobile Network Code), LAC (Location Area Code), current base station ID (CID, Cell ID).

When the mobile POS terminal 100 is conducting a transaction, the mobile POS terminal 100 uploads basic transaction information, mobile POS terminal information and the above base station information (MCC, MNC, LAC and CID) to the transaction server 200; wherein the mobile POS terminal information comprises POS terminal ID and the trader ID to which the POS terminal belongs; the basic transaction information refers to information that is relevant to the content of transaction, such as amount of transaction, ID of transaction card, password of transaction, time of transaction, etc.

When the base station information is acquired in the above first way, at the same time of uploading the basic transaction information and the mobile POS terminal information to the transaction server 200 by the mobile POS terminal 100, it is only required to upload the base station information stored in the memory of the mobile POS terminal 100 together, and it is not required to send request information to the base station to acquire base station information, thus also saving time of transaction handling.

The transaction server 200, upon receipt of the uploaded information, handles a normal transaction request. At the same time, the transaction server 200 sends the base station information and the mobile POS terminal information to the machine-moving risk monitoring device 300.

On the other hand, the machine-moving risk monitoring device 300, upon receipt of the mobile POS terminal information and the base station information, sends the base station information to the location server 400. The location server 400, upon receipt of the base station information, searches a unique base station from the base station location database 500 according to the base station information (MCC, MNC, LAC and CID), and returns the actual location, the longitude and the latitude of the base station to the location server 400. Herein, the actual location of the base station refers to a physical location of the base station.

The location server 400 returns the actual location, the longitude and the latitude of the base station to the machine-moving risk monitoring device 300.

The machine-moving risk monitoring device 300 searches and acquires the location information, the longitude and latitude of trader corresponding to the mobile POS terminal from the trader profile database 600 according to the POS terminal information (the mobile POS terminal ID and the trader ID to which the mobile POS terminal belongs). Here, the location information of trader may be the specific house number.

In the machine-moving risk monitoring device 300, the longitude and latitude of trader acquired from the trader profile database 600 are set to be Lat1, Lng1, the longitude and latitude of the base station where the mobile POS terminal 100 is located, acquired from the location server 400, are set to be Lat2, Lng2, and the actual distance Dis between the mobile POS terminal 100 and the trader is calculated as follows:

(1) since the acquired longitude and latitude are in the format of angle, the angle format is firstly transformed into a radian format:

the longitude and latitude of trader in the radian format is

$$\left( RadLat1 = \frac{Lat1 \times \pi}{180.0} \; , \; RadLng1 = \frac{Lng1 \times \pi}{180.0} \right),$$

the longitude and latitude of mobile POS terminal in the radian format is

$$\left( RadLat2 = \frac{Lat2 \times \pi}{180.0} \; , \; RadLng2 = \frac{Lng2 \times \pi}{180.0} \right),$$

(2) the actual distance is calculated as follows:

$$2 \times \arcsin \sqrt{\sin^2 \frac{RadLat1 - RadLat2}{2} + \cos(RadLat1) \times \cos(RadLat2) \times \sin^2 \frac{RadLng1 - RadLng2}{2}} \times 6378137.0$$

The machine-moving risk monitoring device 300 determines whether the above calculated actual distance Dis is within the preset range according to a preset furthest distance by which the mobile POS terminal 100 can be away from the trader.

If the actual distance Dis exceeds the preset range, it is determined that a machine-moving behavior has happened; and if the actual distance Dis is within the preset range, it is determined that there is no machine-moving behavior.

As described above, in the machine-moving monitoring system for mobile POS terminal according to the invention, the situation in which the mobile POS terminal is not being used in a specified range can be effectively monitored more quickly and accurately than the existing methods. Especially, by calculating the actual distance between the mobile POS terminal and the trader and determining whether the actual distance exceeds the preset range, whether machine-moving has happened can be determined with a very high accuracy of determination result.

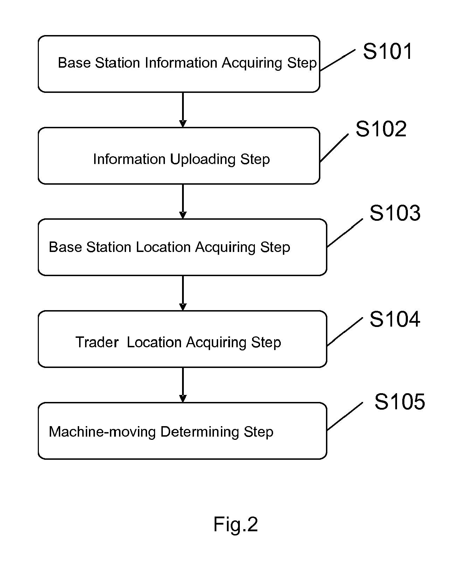

The machine-moving monitoring method for mobile POS terminal according to the invention will be described below. FIG. 2 is a schematic flowchart of the machine-moving monitoring method for mobile POS terminal according to the invention. Hereinafter, the machine-moving monitoring method for mobile POS terminal according to the invention will be described with reference to FIGS. 1 and 2.

As shown in FIG. 2, the machine-moving monitoring method for mobile POS terminal according to the invention comprises the following steps:

A base station information acquiring step S101: the mobile POS terminal 100 acquires base station information of the current base station where the mobile POS terminal is located from the base station 700. The base station information of the current base station where the mobile POS terminal is located is acquired by continuously sending request information to the surrounding base station 700 after a SIM card is inserted into the mobile POS terminal 100. Alternatively, the following way of acquiring base station information can be also used: the mobile POS terminal 100 sends request information to the surrounding base station 700 at the same time of uploading transaction information to the transaction server 200 when conducting the transaction so as to acquire the base station information of the current base station where the mobile POS terminal is located. Herein, the base station information comprises MCC (Mobile Country Code, MNC (Mobile Network Code), LAC (Location Area Code), current base station ID (CID, Cell ID). The acquired base station information is stored in a memory of the mobile POS terminal.

An information uploading step S102: the POS terminal information and the base station information are uploaded to the transaction server 200 when a transaction is being made on the mobile POS terminal 100.

A base station location acquiring step S103: an actual location information of the base station is acquired according to the uploaded base station information. The base station location acquiring step S103 comprises the following sub-steps:

a sub-step S103-1 in which the transaction server 200 sends the base station information to the machine-moving risk monitoring device 300;

a sub-step S103-2 in which the machine-moving risk monitoring device 300 sends the base station information to the location server 400;

a sub-step S103-3 in which the location server 400 searches a unique base station from the base station location database 500 according to the received base station information (MCC, MNC, LAC and CID);

a sub-step S103-4 in which the actual location, the longitude and the latitude of the unique base station are returned to the location server 400; and

a sub-step S103-5 in which the location server 400 returns the actual location, the longitude and the latitude of the base station to the machine-moving risk monitoring device 300.

A trader location information acquiring step S104: a trader location information of a trader corresponding to the mobile POS terminal is acquired according to the uploaded POS terminal information. The trader location information acquiring step S104 comprises the following sub-steps:

a sub-step S104-1 in which the transaction server 200 sends the mobile POS terminal information to the machine-moving risk monitoring device 300;

a sub-step S104-2 in which the machine-moving risk monitoring device 300 searches and acquires the location information, the longitude and latitude of trader corresponding to the mobile POS terminal from the trader profile database 600 according to the POS terminal information; and

a sub-step S104-3 in which the location information, the longitude and latitude of trader are returned to the machine-moving risk monitoring device 300.

A machine-moving determining step S105: an actual distance between the base station 700 and the trader is calculated according to the actual location information of the base station and the trader location information, and it is determined that a machine-moving behavior has occurred if the actual distance exceeds a specified distance. Here, the actual location information of the base station at least comprises the longitude and latitude of actual location of the base station, the trader location information at least comprises the longitude and latitude of trader. Specifically, the longitude and latitude of trader are set to be Lat1, Lng1, the longitude and latitude of the actual location of the base station are set to be Lat2, Lng2, and the actual distance Dis between the mobile POS terminal 100 and the trader is calculated as follows:

(1) since the acquired longitude and latitude are in the format of angle, the angle format is firstly transformed into a radian format:

the longitude and latitude of trader in the radian format is

$$( RadLat1 = \frac{Lat1 \times \pi}{180.0}, \ RadLng1 = \frac{Lng1 \times \pi}{180.0} );$$

the longitude and latitude of mobile POS terminal in the radian format is

$$( RadLat2 = \frac{Lat2 \times \pi}{180.0}, \ RadLng2 = \frac{Lng2 \times \pi}{180.0} );$$

(2) the actual distance is calculated as follows:

$$2 \times \arcsin \sqrt{\sin^2 \frac{RadLat1 - RadLat2}{2} + \cos(RadLat1) \times \cos(RadLat2) \times \sin^2 \frac{RadLng1 - RadLng2}{2}} \times 6378137.0 .$$

As described above, in the machine-moving monitoring method for mobile POS terminal according to the invention, the situation in which the mobile POS terminal is not being used in a specified range can be effectively monitored more quickly and accurately than the existing methods. Especially, by calculating an actual distance between the mobile POS terminal and the trader and determining whether the actual distance exceeds the preset range, whether the machine-moving has happened can be determined with a very high accuracy of determination result.

SECOND EMBODIMENT

The difference between the second embodiment of the machine-moving monitoring system for mobile POS terminal and the first embodiment of the machine-moving monitoring system for mobile POS terminal lies in the structure of the machine-moving risk monitoring device (in the second embodiment, the machine-moving risk monitoring device is given the reference sign of 300'); and the remaining structures in the second embodiment are the same as those in the first embodiment. The machine-moving monitoring system for mobile POS terminal according to the second embodiment will be described hereinafter in respect of the difference.

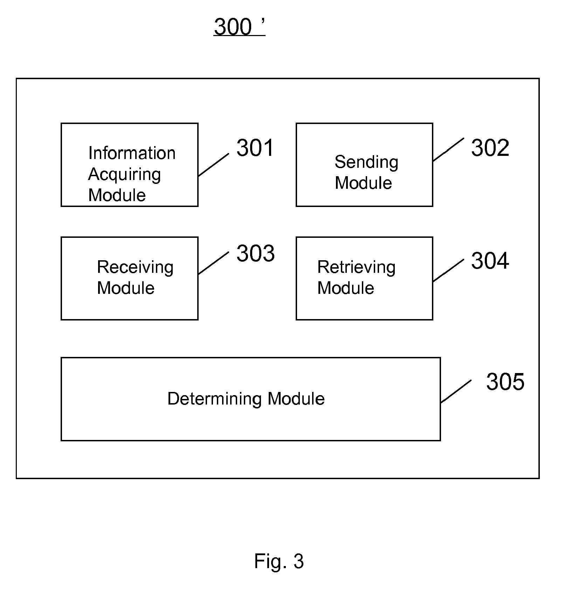

FIG. 3 is a schematic view showing a structure of the machine-moving monitoring device 300' in the machine-moving monitoring system for mobile POS terminal according to the second embodiment of the invention.

As shown in FIG. 3, the machine-moving monitoring device 300' in the second embodiment comprises: an information acquiring module 301; a sending module 302; a receiving module 303; a retrieving module 304; and a determining module 305. The information acquiring module 301 is used for acquiring the base station information and the POS terminal information from the transaction server 200. The sending module 302 is used for sending the base station information acquired from the transaction server 200 to the location server 400. The receiving module 303 is used for receiving the returned actual location information of the base station corresponding to the base information from the location server 400. The retrieving module 304 is used for retrieving trader information from the trader profile database 700 according to the POS terminal information acquired from the transaction server 200. The determining module 305 is used for calculating the actual distance between the current base station and the trader according to the actual location information of the base station and the trader location information, and determining that a machine-moving behavior has occurred if the actual distance exceeds the specified distance (the calculating processes of the determining module 305 are the same as the calculating processes (1) and (2) in the first embodiment).

The machine-moving monitoring system for mobile POS terminal and machine-moving monitoring method for mobile POS terminal according to the invention are mainly described above with reference to embodiments. While only some particular embodiments of the invention are described, those skilled in the art will understand that the invention can be embodied in various other ways without departing from the spirit and scope thereof. Therefore, the disclosed examples and embodiments should be considered as schematic rather than liming. The invention may cover various modifications and replacements without departing from the spirit and scope of the invention defined by the appended claims.

## Claims

1. A machine-moving monitoring method for mobile POS terminal, **characterized by** comprising the following steps:

   a base station information acquiring step in which the mobile POS terminal acquires base station information of a current base station where the mobile POS terminal is located from the base station;
   an information uploading step in which a POS terminal information of the POS terminal and the base station information is uploaded when a transaction is being conducted on the mobile POS terminal;
   a base station location acquiring step in which an actual location information of the base station is acquired according to the uploaded base station information;
   a trader location information acquiring step in which a trader location information of a trader corresponding to the mobile POS terminal is acquired according to the uploaded POS terminal information; and
   a machine-moving determining step in which an actual distance between the base station and the trader is calculated according to the actual location information of the base station and the trader location information, and it is determined that a machine-moving behavior has occurred if the actual distance exceeds a specified distance.

2. The machine-moving monitoring method for mobile POS terminal according to claim 1, **characterized in that**:

   in the base station information acquiring step, acquiring the base station information of the current base station where the mobile POS terminal is located by continuously sending a request information to surrounding base station after a SIM card is inserted into the mobile POS terminal, and the mobile POS terminal storing the base station information in a temporary memory area of the mobile POS terminal after acquiring the base station information.

3. The machine-moving monitoring method for mobile POS terminal according to claim 1, **characterized in that**:

   in the base station information acquiring step, the mobile POS terminal sending a request information to surrounding base station at the same time of uploading transaction information so as to acquire the base station information of the current base station where the mobile POS terminal is located.

4. The machine-moving monitoring method for mobile POS terminal according to claim 1 or 2, **characterized in that**:

   the base station information comprises country code, network code, location area code, current base station ID.

5. The machine-moving monitoring method for mobile POS terminal according to claim 4, **characterized in that**:

   the POS terminal information comprises POS terminal ID and the trader ID to which the POS terminal belongs.

6. The machine-moving monitoring method for mobile POS terminal according to claim 5, **characterized in that**:

   the actual location information of the base station at least comprises the longitude and latitude of the actual location of the base station; and
   the trader location information at least comprises the longitude and latitude of the trader.

7. The machine-moving monitoring method for mobile POS terminal according to claim 6, **characterized in that**:

   in the trader location information acquiring step, the longitude and latitude (Lat1, Lng1) of the trader is acquired as the trader location information according to the POS terminal information;
   in the base station location information acquiring step, the longitude and latitude (Lat2, Lng2) of the actual location of the base station is acquired as the actual location information of the base station according to the base station information; and
   in the machine-moving determining step, the actual distance between the base station and the trader is calculated using the expression below according to the longitude and latitude (Lat1, Lng1) of the trader and the longitude and latitude (Lat2, Lng2) of the actual location of the base station:

$$2\times\arcsin\sqrt{\sin^2\frac{RadLat1-RadLat2}{2}+\cos(RadLat1)\times\cos(RadLat2)\times\sin^2\frac{RadLng1-RadLng2}{2}}\times6378137.0$$
.

8. A machine-moving monitoring system for mobile POS terminal, **characterized by** comprising a mobile POS terminal (100), a transaction server (200), a machine-moving risk monitoring device (300), a location server (400), a base station location database (500) and a trader profile database (600); wherein
   the mobile POS terminal (100) acquiring the base station information of the current base station where the mobile POS terminal is located by sending request information to surrounding base stations, and uploading the base station information and the POS terminal information altogether to the transaction server (200) when conducting the transaction;
   the base station location database (500) storing the actual location information of the base station in unique correspondence to the base station information;
   the trader profile database (700) storing the trader location information of the trader in unique correspondence to the trader information;
   the transaction server (200) forwarding the base station information and the POS terminal information received from the mobile POS terminal (100) to the machine-moving risk monitoring device (300);
   the location server (400), communicatively connected between the machine-moving risk monitoring device (300) and the base station location database(500), retrieving, from the base station location database, the actual location information of the base station corresponding to the base station information according to the base station information from the machine-moving risk monitoring device (300), and returning the actual location information of the base station to the machine-moving risk monitoring device (300);
   the machine-moving risk monitoring device (300) acquiring the base station information and the POS terminal information from the transaction server (200) and sending the acquired base station information to the location server and returns the acquired actual location information of the base station from the location server, on the other hand, retrieving the trader location information from the trader profile database (700) according to the acquired POS terminal information, and calculating the actual distance between the current base station and the trader according to the actual location information of the base station and the trader location information, and determining that a machine-moving behavior has occurred if the actual distance exceeds a specified distance.

9. The machine-moving monitoring system for mobile POS terminal according to claim 8, **characterized in that**:

the mobile POS terminal continuously sends request information to surrounding base stations after a SIM card is inserted into the mobile POS terminal so as to acquire the base station information of the current base station where the mobile POS terminal is located and stores the acquired base station information of the current base station in a temporary memory area of the mobile POS terminal.

10. The machine-moving monitoring system for mobile POS terminal according to claim 8, **characterized in that**:

the mobile POS terminal sends a request information to surrounding base stations at the same time of uploading transaction information so as to acquire the base station information of the current base station where the mobile POS terminal is located.

11. The machine-moving monitoring system for mobile POS terminal according to claim 8 or 9, **characterized in that**:

the base station information comprises country code, network code, location area code, current base station ID.

12. The machine-moving monitoring system for mobile POS terminal according to claim 11, **characterized in that**:

the POS terminal information comprises POS terminal ID and the trader ID to which the POS terminal belongs.

13. The machine-moving monitoring system for mobile POS terminal according to claim 12, **characterized in that**:

the machine-moving risk monitoring device (300) comprises:

an information acquiring module (301) for acquiring the base station information and the POS terminal information from the transaction server (200);
a sending module (302) for sending the base station information to the location server;
a receiving module (303) for receiving the returned actual location information of the base station corresponding to the base information from the location server;
a retrieving module (304) for retrieving trader information from the trader profile database according to the acquired POS terminal information; and
a determining module (305) for calculating the actual distance between the current base station and the trader according to the actual location information of the base station and the trader location information, and determining that the machine-moving behavior has occurred if the actual distance exceeds the specified distance.

14. The machine-moving monitoring system for mobile POS terminal according to claim 13, **characterized in that**:

the location information of the base station at least comprises the longitude and latitude of the actual location of the base station; and
the trader location information at least comprises the longitude and latitude of the trader.

15. The machine-moving monitoring system for mobile POS terminal according to claim 14, **characterized in that**:

the determining module (305) calculates the actual distance between the base station and the trader using the expression below according to the longitude and latitude (Lat1, Lng1) of the trader and the longitude and latitude (Lat2, Lng2) of the actual location of the base station:

$$2\times\arcsin\sqrt{\sin^2\frac{RadLat1-RadLat2}{2}+\cos(RadLat1)\times\cos(RadLat2)\times\sin^2\frac{RadLng1-RadLng2}{2}}\times6378137.0$$
.

Fig. 1

```
┌──────────────────────────────────────────┐
│  Base Station Information Acquiring Step  │ ─── S101
└──────────────────────────────────────────┘
                     │
                     ▼
┌──────────────────────────────────────────┐
│         Information Uploading Step        │ ─── S102
└──────────────────────────────────────────┘
                     │
                     ▼
┌──────────────────────────────────────────┐
│      Base Station Location Acquiring Step │ ─── S103
└──────────────────────────────────────────┘
                     │
                     ▼
┌──────────────────────────────────────────┐
│        Trader  Location Acquiring Step    │ ─── S104
└──────────────────────────────────────────┘
                     │
                     ▼
┌──────────────────────────────────────────┐
│       Machine-moving Determining Step     │ ─── S105
└──────────────────────────────────────────┘
```

Fig.2

300 '

Information
Acquiring
Module ⟋ 301

Sending
Module ⟋ 302

Receiving
Module ⟋ 303

Retrieving
Module ⟋ 304

Determining Module ⟋ 305

Fig. 3

# INTERNATIONAL SEARCH REPORT

| International application No. |
|---|
| **PCT/CN2013/083790** |

### A.  CLASSIFICATION OF SUBJECT MATTER

G07G 1/14 (2006.01) i

According to International Patent Classification (IPC) or to both national classification and IPC

### B.  FIELDS SEARCHED

Minimum documentation searched (classification system followed by classification symbols)

IPC: G07G, H04M, H04L, G06Q

Documentation searched other than minimum documentation to the extent that such documents are included in the fields searched

Electronic data base consulted during the international search (name of data base and, where practicable, search terms used)

CNABS, CNTXT, CNKI: telephone relocation, POS, point of sale, sale, swiping card, terminal, monitor, supervise, alarm, position, base station, longitude, latitude, distance, move, exceed, greater, beyond, cash, offsite, commercial tenant, merchant

VEN, WPI, EPODOC: POS, point of sale, relocate+, mov+, base, station?, distance?, supervise+, monitor+, surveillance+, superintend+, card, reader?, position?

### C.  DOCUMENTS CONSIDERED TO BE RELEVANT

| Category* | Citation of document, with indication, where appropriate, of the relevant passages | Relevant to claim No. |
|---|---|---|
| A | CN 102521936 A (FUJIAN LANDI COMMERCIAL EQUIPMENT CO., LTD.), 27 June 2012 (27.06.2012), description, paragraphs [0013]-[0022], and figure 1 | 1-15 |
| A | CN 102486884 A (SHENZHEN XINGUODU TECHNOLOGY CO., LTD.), 06 June 2012 (06.06.2012), the whole document | 1-15 |
| A | CN 102497645 A (SHENZHEN XINGUODU TECHNOLOGY CO., LTD.), 13 June 2012 (13.06.2012), the whole document | 1-15 |
| PA | CN 102750790 A (FUJIAN LANDI COMMERCIAL EQUIPMENT CO., LTD.), 24 October 2012 (24.10.2012), the whole document | 1-15 |
| A | EP 1696626 A1 (RES IN MOTION LTD.), 30 August 2006 (30.08.2006), the whole document | 1-15 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 December 2013 (17.12.2013) | **02 January 2014 (02.01.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHU, Xueyu** Telephone No.: (86-10) **62085806** |
|---|---|

Form PCT/ISA/210 (second sheet) (July 2009)

## INTERNATIONAL SEARCH REPORT
### Information on patent family members

International application No.

**PCT/CN2013/083790**

| Patent Documents referred in the Report | Publication Date | Patent Family | Publication Date |
|---|---|---|---|
| CN 102521936 A | 27.06.2012 | None | |
| CN 102486884 A | 06.06.2012 | None | |
| CN 102497645 A | 13.06.2012 | WO 2013060195 A1 | 02.05.2013 |
| | | US 2013232020 A1 | 05.09.2013 |
| CN 102750790 A | 24.10.2012 | None | |
| EP 1696626 A1 | 30.08.2006 | CA 2537455 C | 28.08.2012 |
| | | US 2007184818 A1 | 09.08.2007 |
| | | US 2006194592 A1 | 31.08.2006 |
| | | CA 2537455 A1 | 28.08.2006 |
| | | US 7221949 B2 | 22.05.2007 |

Form PCT/ISA/210 (patent family annex) (July 2009)

**EP 2 902 982 A1**

**Patent documents cited in the description**

- CN 2013083790 W

- CN 201210373449